# EUROPEAN PATENT SPECIFICATION

(11) **EP 1 876 072 B1**
(45) Date of publication and mention of the grant of the patent: **12.05.2010**
(21) Application number: 07252600.7
(22) Date of filing: 27.06.2007
(51) Int. Cl.: B60R 25/00, E05B 49/00

(54) **Robbery prevention system for vehicle**
Diebstahlsicherungssystem für ein Fahrzeug
Système de prévention contre le vol pour véhicule

(30) Priority: 07.07.2006 JP 2006188174; 27.09.2006 JP 2006263347; 20.03.2007 JP 2007073484
(43) Date of publication of application: 09.01.2008
(73) Proprietor: Yamaha Hatsudoki Kabushiki Kaisha, Iwata-shi, Shizuoka-ken 438-8501 (JP)
(72) Inventor: Ito, Sachio, Iwata-shi Shizuoka-ken 438-8501 (JP)
(74) Representative: Lamb, Martin John Carstairs

(56) References cited:
- EP-A- 1 095 827
- DE-A1- 4 333 474
- JP-A- 8 150 898

## Description

### FIELD OF THE INVENTION

The present invention relates to a technology for registering ID information of a portable device carried by a user of a vehicle having a robbery prevention system and a vehicle having the robbery prevention system.

### BACKGROUND TO THE INVENTION

In recent years, an immobilizer system which authenticates a key inserted into a key cylinder based on ID information electronically provided for the key, and a so-called smart key system which authenticates a portable device carried by a user of a vehicle based on ID information wirelessly received from the portable device have been more widely used as systems for securely preventing robbery or theft of vehicles.

According to this type of robbery prevention system, a lock controller for performing the authentication process of the portable device or the key stores ID information of the portable device or the key in advance. However, at the time of replacement of the lock controller which is faulty or for other reasons, it is necessary to register the ID information again on a new lock controller. For registration of ID information, a specialized registration device is usually connected with the lock controller, and the ID information is inputted from the registration device to the lock controller. Thus, a user of the robbery prevention system is required to ask a specialist having the registration device to register the ID information at the time of replacement of the lock controller, and therefore the robbery prevention system is unsatisfactory from the viewpoint of convenience.

A robbery prevention system which seeks to overcome this drawback is disclosed in JP-A-8-150898. This prior art system stores ID information in an engine controller as well as a lock controller. According to this system, ID information is transmitted from the engine controller to the lock controller at the time of replacement of the lock controller to register the ID information on the lock controller. Thus, no special registration device is needed.

However, the robbery prevention system disclosed in JP-A-8-150898 does not fully overcome the problem of inconvenience. According to the robbery prevention system shown in JP-A-8-150898, ID information identical to ID information of a key is transmitted from the engine controller to a new lock controller and stored therein when the key is inserted into a key cylinder after replacement of the previous lock controller. Thus, the key needs to be inserted into the key cylinder for registration of the ID information, which operation is rather complicated and troublesome.

The invention has been developed in an attempt to solve the above problems. It is an object of the invention to provide a robbery prevention system capable of simplifying registration of ID information at the time of replacement of a lock controller, and a vehicle having the robbery prevention system.

### SUMMARY OF THE INVENTION

According to a first aspect of the present invention, there is provided a robbery prevention system comprising:
a portable device comprising unique ID information;
a lock controller comprising memory means adapted to store the ID information, authenticate the portable device based on the ID information stored in the memory means and the ID information received from the portable device, and lock or unlock a control target device according to an authentication result; and
an auxiliary controller comprising memory means and adapted to transmit and receive data to and from the lock controller and store the ID information of the portable device as backup data within the memory means,
wherein the lock controller includes:
receiving means adapted to receive the ID information from the auxiliary controller; and
searching and storing means adapted to transmit a response requiring signal for searching for the portable device which has the ID information received by the receiving means from the auxiliary controller and is present within a predetermined detection range, and store the ID information of the portable device which has transmitted a response signal to the response requiring signal in the memory means.

According to a second aspect of the present invention, there is provided a robbery prevention system comprising: a portable device that has ID information provided exclusively for the portable device; a lock controller that has memory means which stores the ID information, authenticates the portable device based on the ID information stored in the memory means and the ID information received from the portable device, and locks or unlocks a control target device according to the authentication result; and an auxiliary controller that transmits and receives data to and from the lock controller and stores the ID information of the portable device as backup data. The lock controller includes: receiving means that receives the ID information from the auxiliary controller; and searching and storing means that transmits a response requiring signal for searching the portable device which has the ID information received by the receiving means from the auxiliary controller and is present within a predetermined detection range, and stores the ID information of the portable device which has transmitted a response signal to the response requiring signal in the memory means.

According to the robbery prevention system of the invention, the searching and storing means transmits the response requiring signal to search the portable device. Thus, registration of the portable device necessary when the lock controller is replaced is facilitated.

According to an example of the robbery prevention system of the invention, the ID information is information each of which is allocated to the corresponding portable device in advance.

According to an example of the robbery prevention system of the invention, an operation device is further provided, and the control target device controlled by the lock controller restricts operation of the operation device. The operation of the operation device is restricted when the control target device controlled by the lock controller is locked, and the operation of the operation device is allowed when the control target device controlled by the lock controller is unlocked to release the restriction by the control target device.

According to an example of the robbery prevention system of the invention, the lock controller further includes detecting means that detects replacement of the lock controller. The searching and storing means stores the ID information of the portable device having transmitted the response signal to the response requiring signal at the time of replacement of the lock controller. Thus, registration of the portable device necessary when the lock controller is replaced is further facilitated. In this example, the detecting means may judge that the lock controller has been replaced when the memory means of the lock controller does not have the ID information.

According to an example of the robbery prevention system of the invention, the searching and storing means of the lock controller stores a predetermined number of the ID information in the memory means. In this example, security for registration of the portable device improves.

According to an example of the robbery prevention system of the invention, the auxiliary controller further includes backup renewing means that renews the ID information stored in the memory means of the auxiliary controller as backup data according to predetermined timing. In this example, new ID information can be registered on the lock controller when the lock controller is replaced with new one.

According to a third aspect of the present invention, there is provided a vehicle comprising a robbery prevention system according to the first or second aspects.

According to the vehicle of the invention, registration of the portable device necessary when the lock controller is replaced is facilitated.

### BRIEF DESCRIPTION OF THE DRAWINGS

These and other aspects of the present invention will now be described, by way of example only, with reference to the accompanying drawings, in which:
Fig. 1 is a side view of a motorcycle having a robbery prevention system according to an embodiment of the invention;
Fig. 2 is a block diagram showing a structure of the robbery prevention system;
Fig. 3 is a block diagram showing a structure of a lock controller included in the robbery prevention system;
Fig. 4 is a block diagram showing a lock unit included in the robbery prevention system;
Fig. 5 is a block diagram showing a structure of a portable device included in the robbery prevention system;
Fig. 6 is a function block diagram showing processes executed by a control section of the lock controller;
Fig. 7 is a function block diagram showing processes executed by a control section of the lock unit;
Fig. 8 is a function block diagram showing processes executed by a control section of the portable device;
Fig. 9 is a sequence diagram showing an example of a re-storing process executed when the lock controller is replaced with new one;
Fig. 10 is a sequence diagram showing an example of a process for renewing backup data retained by the lock unit; and
Fig. 11 is a flowchart showing an example of a re-storing process executed by the control section of the lock controller when the lock controller is replaced with new one.

### DETAILED DESCRIPTION OF THE DRAWINGS

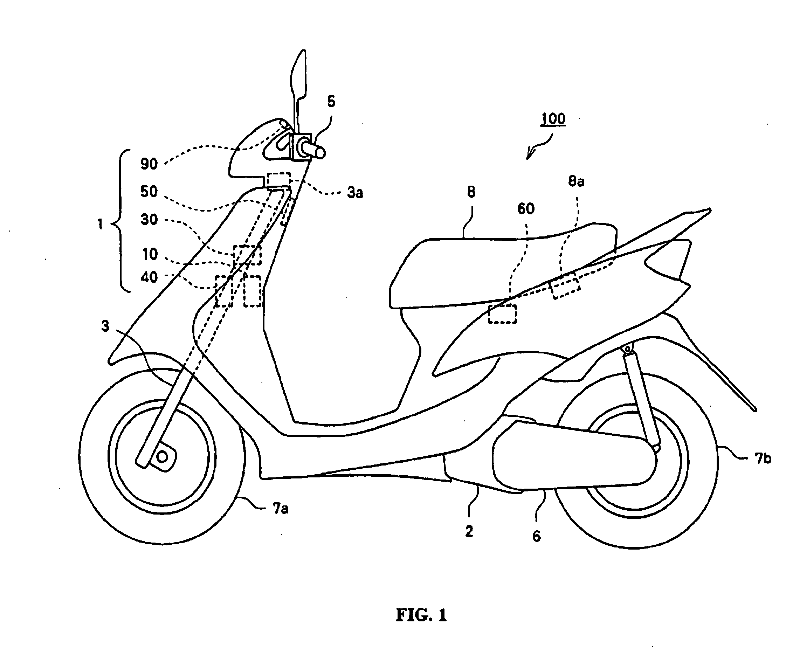

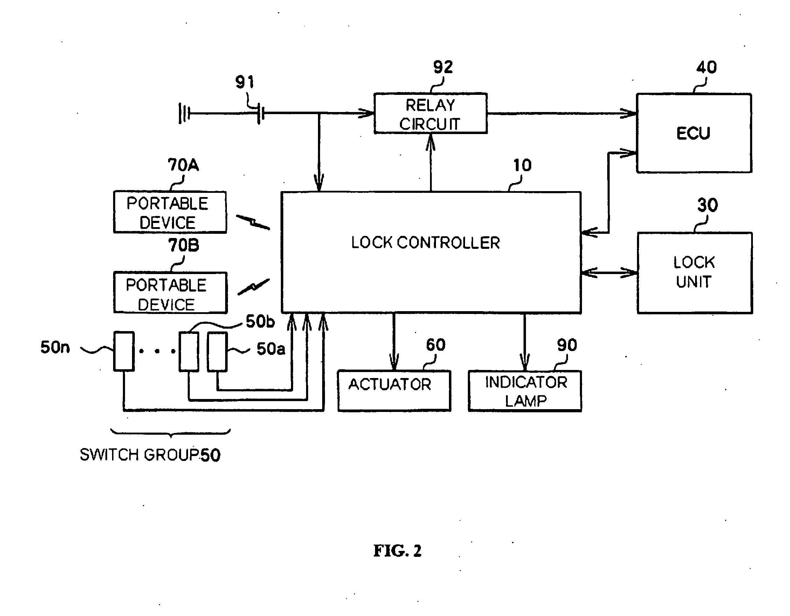

Fig. 1 is a side view of a motorcycle 100 including a robbery prevention system 1 according to an embodiment the invention. Fig. 2 is a block diagram showing the structure of the robbery prevention system 1. As illustrated in Fig. 1, the motorcycle 100 includes the robbery prevention system 1, an actuator 60, an engine 2, and a steering shaft 3.

The steering shaft 3 extends diagonally downward, and has a handlebar 5 at the upper end and a front wheel 7a at the lower end. The steering shaft 3 is locked by a lock mechanism 3a in such a condition that the rotation of the steering shaft 3 is restricted at the time of stop of the vehicle. The engine 2 is disposed in the central lower region of the vehicle body, and the driving force of the engine 2 is transmitted to a rear wheel 7b via a driving force transmission mechanism 6. An openable and closable seat 8 is disposed above the engine 2, and a storage space (not shown) is provided below the seat 8. A lock mechanism 8a is provided to restrict opening and closing of the seat 8 when the seat 8 is at a close position. The actuator 60 actuates the lock mechanism 8a to restrict or allow opening and closing of the seat 8. A solenoid valve which locks or unlocks a lock mechanism of a console box or the like may be provided as an actuator.

As shown in Fig. 2, the robbery prevention system 1 includes a lock controller 10, a lock unit (auxiliary controller) 30, an engine control unit (ECU) 40, a switch group 50 constituted by a plurality of switches, portable devices 70A and 70B, and an indicator lamp 90.

The indicator lamp 90 is an LED (light emitting diode) provided on an instrument panel, for example. The indicator lamp 90 is turned on by power supplied from the lock controller 10, and notifies a rider about errors or the like caused in the processes performed by the lock controller 10.

The switch group 50 includes a plurality of switches such as a starter switch 50a, a sensor-type switch 50b used by the rider to open and close the console box, and a sensor-type switch 50n to release the lock of the seat 8. These switches transmit signals to the lock controller 10 in accordance with the switch operations performed by the user.

The lock controller 10 retains ID (identification) information provided exclusively for each of the portable devices 70A and 70B (hereinafter referred to as portable device ID), and authenticates the portable device present within a predetermined detection range based on the portable device ID retained by the lock controller 10 and the portable device ID received from the portable device present within the detection range. When the portable device is authenticated as a proper portable device, the lock controller 10 locks or unlocks control target devices (lock mechanism 8a, lock mechanism 3a, and ECU 40 in this example) mounted on the vehicle. The motorcycle 100 has operation devices (steering shaft 3, seat 8, ECU 40 in this example), and operations of the operation devices are restricted by the control target devices. The operations of the operation devices are restricted by the control target devices when the control target devices are locked by the lock controller 10. The operations of the operation devices are allowed when the control target devices are unlocked by the lock controller 10 to release the restriction by the control target devices. For example, the opening and closing of the seat 8 or the rotation of the steering shaft 3 is restricted when the lock mechanism 8a or the lock mechanism 3a is locked by the lock controller 10, and the opening and closing of the seat 8 or the rotation of the steering shaft 3 is allowed when the lock mechanism 8a or the lock mechanism 3a is unlocked by the lock controller 10. The ECU 40 is locked and the start of the engine 2 is restricted when power supply to the ECU 40 is cut off by the lock controller 10. The engine 2 is allowed to start when power is supplied to the ECU 40 by the lock controller 10. The portable device IDs of the portable devices 70A and 70B are information each of which is allocated to the corresponding portable device in advance so as to identify each of the portable devices. The portable device IDs are established for the respective portable devices in their manufacturing process, for example.

In this embodiment, it is assumed that the lock controller 10 is a device newly mounted on the vehicle body after replacement of the previous lock controller, and does not have the portable device IDs of the portable devices 70A and 70B in the initial condition. The lock controller 10 acquires the portable device IDs by processes which will be described later.

The lock unit 30 locks the lock mechanism 3a to restrict the rotation of the steering shaft 3 and unlocks the lock mechanism 3a to allow the rotation of the steering shaft 3 when the portable device 70A or device 70B is authenticated as the proper device from the result of the authentication process executed by the lock controller 10. In this embodiment, the lock unit 30 retains backup data of the portable device IDs stored in the lock controller 10 and ID information provided exclusively for the lock controller 10 (hereinafter referred to as lock controller ID). The lock controller ID is information allocated to the lock controller 10 so as to distinguish the lock controller 10 from other lock controllers mounted on other vehicle bodies. The lock controller ID is established for each of the lock controllers in their manufacturing process, for example. While it is assumed that the lock unit 30 is an auxiliary controller which retains backup data in this embodiment, the ECU 40 may be used as the auxiliary controller, for example.

The ECU 40 controls the fuel injection quantity supplied for the engine 2 and the injection timing by adjusting power supplied to an injector. When the portable device 70A or 70B is authenticated as the proper device based on the result of the authentication process performed by the lock controller 10 under the condition that the starter switch 50a is turned on by the rider, power is supplied from a battery 91 to the ECU 40 through a relay circuit 92. By this process, the engine 2 is allowed to start.

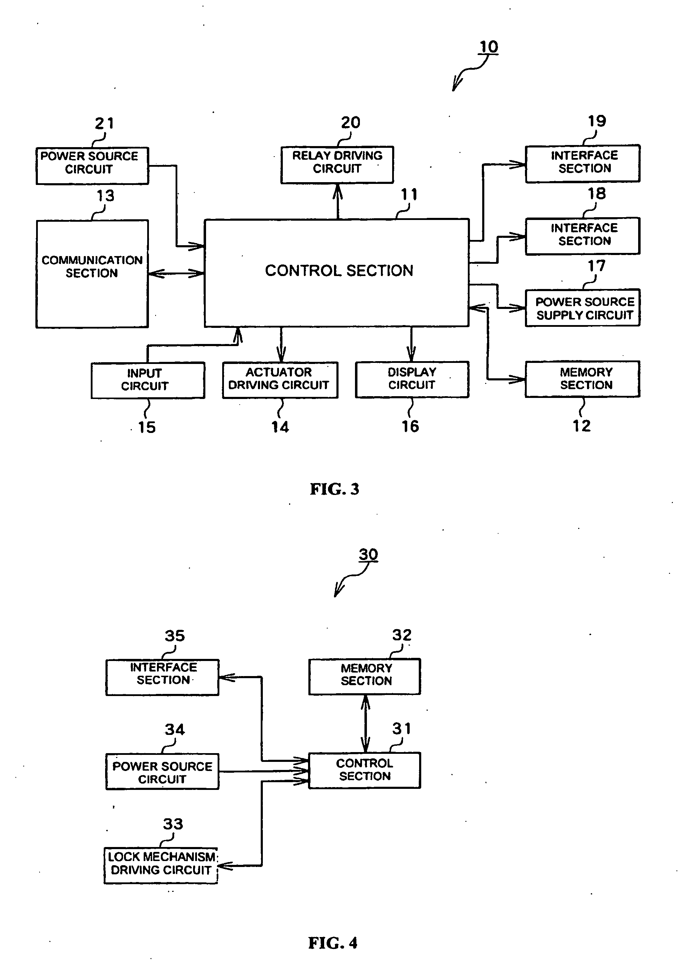

The respective structures of the lock controller 10, the lock unit 30, and the portable devices 70A and 70B will now described in detail. Initially, the structure of the lock controller 10 will be explained. Fig. 3 is a block diagram showing the structure of the lock controller 10. As illustrated in this figure, the lock controller 10 includes a control section 11, a memory section 12, a communication section 13, an actuator driving circuit 14, an input circuit 15, a display circuit 16, a power source supply circuit 17, interface sections 18 and 19, a relay driving circuit 20, and a power source circuit 21.

The power source circuit 21 supplies power received from the battery 91 (see Fig. 2) to the respective components constituting the lock controller 10. Fig. 3 does not show connection lines for connecting the respective components with the power source circuit 21. The relay driving circuit 20 supplies or cuts off power to the relay circuit 92 in response to a signal inputted from control section 11.

The power source supply circuit 17 supplies power received from the battery 91 via the power source circuit 21 to the lock unit 30. The display circuit 16 supplies power to the indicator lamp 90 in response to a signal inputted from the control section 11. The input circuit 15 converts analog signals inputted through the respective switches of the switch group 50 into digital signals and outputs the converted signals to the control section 11. The actuator driving circuit 14 supplies power to the actuator 60 in response to a signal inputted from the control section 11. The communication section 13 includes a wireless communication antenna. The communication section 13 converts and amplifies the digital signals inputted from the control section 11 into radio signals and transmits the radio signals. The communication section 13 also converts and amplifies the radio signals received from the portable devices 70A and 70B into digital signals, and outputs the digital signals to the control section 11.

The interface section 19 outputs signals to the ECU 40 based on commands issued from the control section 11. The interface section 18 outputs signals to the lock unit 30 based on commands issued from the control section 11. For example, when the portable device is authenticated as a proper device based on the result of the authentication process for the portable device, signals indicating this fact are outputted from the interface sections 18 and 19.

The control section 11 includes a CPU, and controls the entire components of the lock controller 10 by executing programs stored in the memory section 12. According to this embodiment, such processes are particularly performed for acquiring the portable device IDs stored in the lock unit 30 as backup data and storing the portable device IDs in the memory section 12 required when the new lock controller 10 is mounted on the vehicle body after replacement of the previous lock controller. The processes executed by the control section 11 will be discussed in detail later.

The memory section 12 includes a readable and writable non-volatile memory, and has programs to be executed by the control section 11. According to this embodiment, the lock controller ID, the portable device IDs, and information indicating the number of the portable devices registered (hereinafter referred to as registration number information) are stored in the memory section 12 by the processes performed by the control section 11 as will described later.

Next, the structure of the lock unit 30 is explained. Fig. 4 is a block diagram showing the structure of the lock unit 30. As illustrated in this figure, the lock unit 30 includes a control section 31, a memory section 32, a lock mechanism driving circuit 33, a power source circuit 34, and an interface section 35.

The interface section 35 outputs signals received from the interface section 18 of the lock controller 10 to the control section 31, and transmits signals to the interface section 18 based on commands issued from the control section 31. The power source circuit 34 supplies power received from the power source supply circuit 17 of the lock controller 10 to the respective parts of the lock unit 30. Fig. 4 does not show connection lines for connecting the respective components with the power source circuit 34. The lock mechanism driving circuit 33 supplies power to the actuator of the lock mechanism 3a of the steering shaft 3 in response to a signal inputted from the control circuit 31.

The memory section 32 includes a readable and writable non-volatile memory, and retains programs to be executed by the control section 31. The memory section 32 also retains the lock controller ID, the portable device IDs, and the registration number information as backup data. According to this embodiment, the memory section 32 in the initial condition retains the portable device IDs and the like stored in the previous lock controller mounted on the vehicle body before replacement as backup data.

The control section 31 includes a CPU, and controls the entire components of the lock unit 30 by executing the programs stored in the memory section 32. For example, the control section 31 performs processes for authorizing the lock controller 10 based on the lock controller ID transmitted from the lock controller 10, and renewing the backup data stored in the memory section 32. In this embodiment, the control section 31 particularly transmits the backup data stored in the memory section 32 to the lock controller 10 in response to requirement of the lock controller 10 at the time of registration of the portable device ID on the lock controller 10. The processes executed by the control section 31 will be described in detail later.

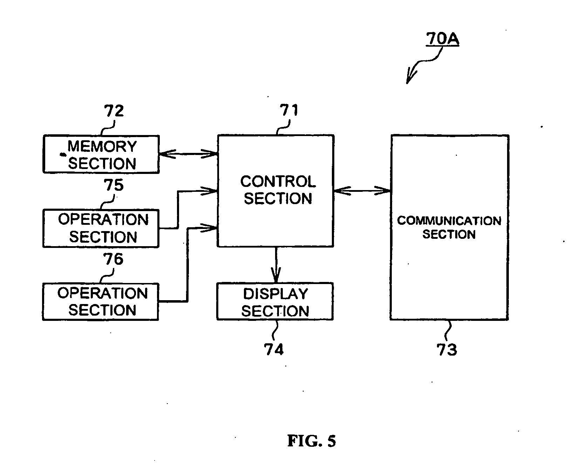

Next, the structures of the portable devices 70A and 70B are discussed in detail. Fig. 5 is a block diagram showing the structure of the portable device 70A. As illustrated in this figure, the portable device 70A includes a control section 71, a memory section 72, a communication section 73, a display section 74, and operation sections 75 and 76. The portable device 70B has a structure similar to that of the portable device 70A, and thus detailed explanation of the portable device 70B is not repeated herein.

The operation sections 75 and 76 are switches which are operated by the rider and output signals to the control section 71 in accordance with the operation by the rider. The display section 74 is an LED, for example, and is turned on in response to a signal outputted from the control section 71. The communication section 73 includes a wireless communication antenna. The communication section 73 converts and amplifies digital signals inputted from the control section 71 into radio signals and transmits the radio signals. The communication section 73 also converts and amplifies the radio signals received from the lock controller 10 into digital signals and outputs the digital signals to the control section 71.

The memory section 72 includes a readable and writable non-volatile memory, and retains programs to be executed by the control section 71. The memory section 72 also stores portable device IDs provided exclusively for each portable device in advance.

The control section 71 including a CPU executes the programs stored in the memory section 72, and controls the entire components of the portable device 70. The processes performed by the control section 71 will be discussed in detail later.

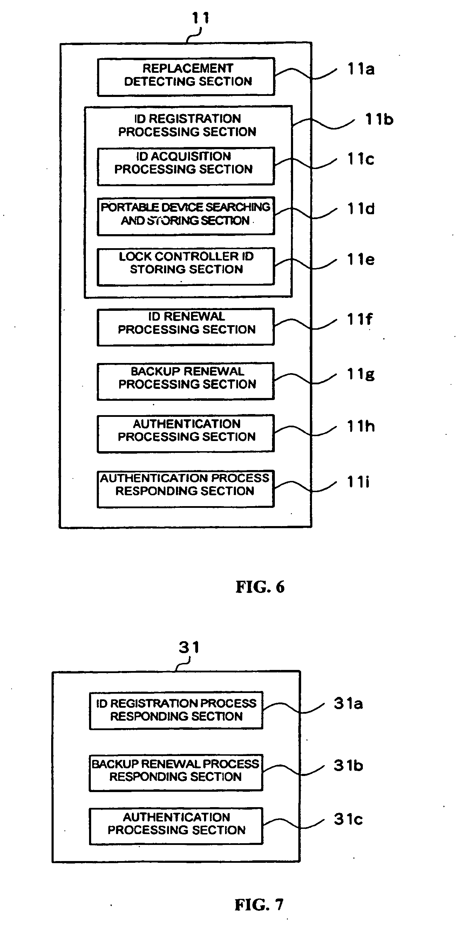

The processes executed by the control section 11 of the lock controller 10 are now explained in detail. Fig. 6 is a function block diagram of the control section 11. As shown in this figure, the control section 11 includes a replacement detecting section 11a, an ID registration processing section 11b, an ID renewal processing section 11f, a backup renewal processing section 11g, an authentication processing section 11h, and an authentication process responding section 11i. The ID registration processing section 11b functions when the new lock controller 10 is mounted on the vehicle body after replacement of the previous lock controller. The ID renewal processing section 11f, the backup renewal processing section 11g, the authentication processing section 11h, and the authentication process responding section 11i function in the ordinary conditions after the process executed by the ID registration processing section 11b is completed. The processes performed by the respective sections are herein discussed in detail.

The replacement detecting section 11a detects the condition where the lock controller 10 has been replaced with new one. The replacement detecting section 11a detects the replacement of the lock controller by the following method, for example.

The replacement detecting section 11a searches the portable device ID in the memory area of the memory section 12, and judges that the new lock controller 10 has been mounted on the vehicle body by replacement of the lock controller when no portable device ID is detected.

In this step, the following method may be employed. At the manufacturing stage of the lock controller 10, information that the lock controller 10 is in the initial condition, that is, no portable device ID has been stored in the memory section 12 yet (no registration information) is stored in the memory section 12 in advance. Then, the replacement detecting section 11a searches the non registration information in the memory area of the memory section 12, and judges that the new lock controller 10 has been mounted on the vehicle body when the non registration information is detected. Alternatively, the replacement detecting section 11a may judge that the new lock controller 10 has been mounted on the vehicle body based on a signal inputted from the switch group 50 by predetermined switch operation executed by the operator.

When the replacement of the lock controller 10 is detected, the ID registration processing section 11b executes re-storing process for acquiring the portable device IDs from the lock unit 30 and storing the portable device IDs in the memory section 12. The ID registration processing section 11b includes an ID acquisition processing section 11c, a portable device searching and storing section 11d, and a lock controller ID storing section 11e.

The ID acquisition processing section 11c acquires the portable device IDs and lock controller ID. More specifically, the ID acquisition processing section 11c transmits a requirement signal for requiring transmission of the portable device IDs and the lock controller ID retained by the lock unit 30 as backup data to the lock unit 30. Then, the ID acquisition processing section 11c receives the portable device IDs and the lock controller ID transmitted from the lock unit 30 in response to the requirement signal.

The portable device searching and storing section 11d transmits a response requiring signal for searching portable devices which have the portable device IDs received from the lock unit 30 (portable devices 70A and 70B in this example) and are present within a predetermined detection range (within a detection range of the lock controller 10 such as an area of several meters). When response signals to the response requiring signal are received from the portable device 70A and 70B, the portable device IDs of the portable devices having transmitted the response signals are stored in the memory section 12. The portable device searching and storing section 11d may register all the portable devices which have the portable device IDs stored in the lock unit 30 and have transmitted the response signals, or may register only a predetermined number of the portable devices.

The lock controller ID storing section 11e stores the lock controller ID acquired by the ID acquisition processing section 11c from the lock unit 30 in the memory section 12. By this process, the lock controller 10 obtains the lock controller ID of the previous lock controller mounted on the vehicle body before replacement.

At the time of new registration of a portable device, the ID renewal processing section 11f stores the portable device ID of this portable device in the memory section 12. More specifically, when predetermined switch operation (hereinafter referred to as first operation) is initially performed by the operator, the ID renewal processing section 11f transmits a requirement signal for requiring portable device ID to a portable device not yet registered and present in the predetermined detection range. Then, the ID renewal processing section 11f receives the portable device ID transmitted from the portable device in response to the requirement signal. When predetermined switch operation different from the first operation (hereinafter referred to as second operation) is performed, the portable device IDs having been stored in the memory section 12 are deleted and thereafter the portable device ID of the unregistered portable device is stored in the memory section 12. When predetermined switch operation different from the second operation is performed, the portable device ID of the unregistered portable device is added to the registered portable device IDs and stored in the memory section 12. When the number of the portable device IDs stored in the memory section 12 changes after renewal of the portable device IDs, the ID renewal processing section 11f further renews the registration number information.

The backup renewal processing section 11g renews backup data retained by the lock unit 30 in accordance with predetermined timing. The predetermined timing herein includes the time when the start switch 50a is turned on by the rider, when new portable device ID is registered by the ID renewal processing section 11f, when predetermined time elapses from the previous renewal of the backup data, and other timing. The backup data renewed by the backup renewal processing section 11g is supplied for the re-storing process of the portable device ID to be executed later. The renewal process of the backup data is performed by the following method, for example.

The backup renewal processing section 11g acquires the portable device IDs and the registration number information (hereinafter abbreviated as portable device information) stored as backup data from the lock unit 30. Then, the backup renewal processing section 11g compares the acquired portable device information and the portable device information stored in the memory section 12, and transmits the portable device information in the memory section 12 to the lock unit 30 when the information does not coincide with the other information (for example, when new portable device ID is added by the ID renewal processing section 11f). Then, the lock unit 30 retains the received portable device information as backup data. The process to be executed by the lock unit 30 will be discussed in detail later.

The authentication processing section 11h authenticates a portable device present within the detection range when a predetermined switch contained in the switch group 50 (start switch 50a, for example) is turned on. When it is determined that this portable device is a proper portable device (portable device 70A or 70B in this embodiment) based on the authentication, the authentication processing section 11h unlocks or locks the control target devices. For example, the authentication processing section 11h transmits a signal indicating the judgment result to the lock unit 30 to release the locked condition of the lock mechanism 3a and allow the rotation of the steering shaft 3. Also, the authentication processing section 11h turns on the relay circuit 92 and supplies power to the ECU 40 to release the locked condition of the ECU 40 and bring the engine 2 into the starting condition. Furthermore, the authentication processing section 11h actuates the actuator 60 to release the locked condition of the lock mechanism 8a and thereby allow the opening and closing of the seat 8.

The method of the authentication process performed by the authentication processing section 11h is a challenge and response method, for example. According to this method, the authentication processing section 11h transmits the lock controller ID of the lock controller 10 and challenge data. The authentication processing section 11h calculates response data from the challenge data and the portable device ID stored in the memory section 12. When the portable device 70A or 70B having received the challenge data calculates response data from the challenge data and portable device ID and transmits the response data to the lock controller 10, the authentication processing section 11h compares the received response data and the response data previously calculated. When the response data coincides with the other response data, it is judged that the portable device having transmitted the response data has been already registered and therefore is a proper portable device. The method of authentication is not limited to the challenge and response method, but may be other methods such as plain text authentication.

The authentication process responding section 11i responds to a signal transmitted from the lock unit 30 in the authentication process for authenticating the lock controller 10 by the lock unit 30. For example, when the lock unit 30 transmits a signal for requiring the lock controller ID, the authentication process responding section 11i reads the lock controller ID from the memory section 12 and transmits the lock controller ID to the lock unit 30 in response to the signal. When the authentication process performed by the lock unit 30 uses the challenge and response method, the authentication process responding section 11i creates response data from the challenge data received from the lock unit 30 and the lock controller ID, and transmits the response data to the lock unit 30. The authentication process performed by the lock unit 30 will be described in detail later.

The process executed by the control section 31 of the lock unit 30 is now explained. Fig. 7 is a function block diagram of the control section 31. As illustrated in this figure, the control section 31 includes an ID registration process responding section 31a, a backup renewal process responding section 31b, and an authentication processing section 31c as functional divisions.

The ID registration process responding section 31a responds to a signal transmitted from the lock controller 10 in the portable device ID re-storing process discussed above. More specifically, when receiving a requirement signal requiring the portable device IDs and the lock controller ID from the lock controller 10, the ID registration process responding section 31a reads the portable device IDs and the lock controller ID from the memory section 32 and transmits these IDs to the lock controller 10 in response to the requirement signal.

The ID registration process responding section 31a may encode the portable device IDs and the lock controller ID before transmission. The encoding method is an open key encoding method, for example. In this case, the lock controller 10 retains secret key data in advance. The ID registration process responding section 31a acquires open key data from the lock controller 10, encodes the portable device IDs and the lock controller ID using the open key data, and transmits the encoded IDs to the lock controller 10. The lock controller 10 decodes the signals transmitted from the ID registration process responding section 31a according to the secret key data to acquire the portable device IDs or the like. The encoding method may be a secret key encoding method.

The backup renewal process responding section 31b responds to a signal transmitted from the lock controller 10 in the renewal process performed by the backup renewal processing section 11g discussed above. For example, when the backup data is required by the lock controller 10, the backup renewal process responding section 31b transmits the portable device information stored in the memory section 32 in response to the requirement. When portable device information is received from the lock controller 10 in the later process, the newly received portable device information is overwritten on the portable device information in the memory section 32 as new backup data.

The authentication processing section 31c authenticates the lock controller 10 based on the lock controller ID. This authentication process is performed when the start switch 50a is turned on, when the portable device is authorized as a proper portable device based on the result of authentication process for the portable device executed by the lock controller 10 under the condition where the start switch 50a is turned on, and on other occasions, for example.

The authentication process executed by the authentication processing section 31c uses the challenge and response method discussed above, for example. According to this method, the authentication processing section 31c creates challenge data and transmits the data to the lock controller 10. Simultaneously, the authentication processing section 31c calculates response data from the challenge data and the lock controller ID stored in the memory section 32 in advance. On the other hand, the authentication process responding section 11i of the lock controller 10 creates response data from the received challenge data and the lock controller ID stored in the memory section 12 and transmits the data to the lock unit 30. The authentication processing section 31c compares the response data received from the lock controller 10 and the response data previously calculated, and judges that the lock controller 10 is a proper device when the response data coincides with the other response data.

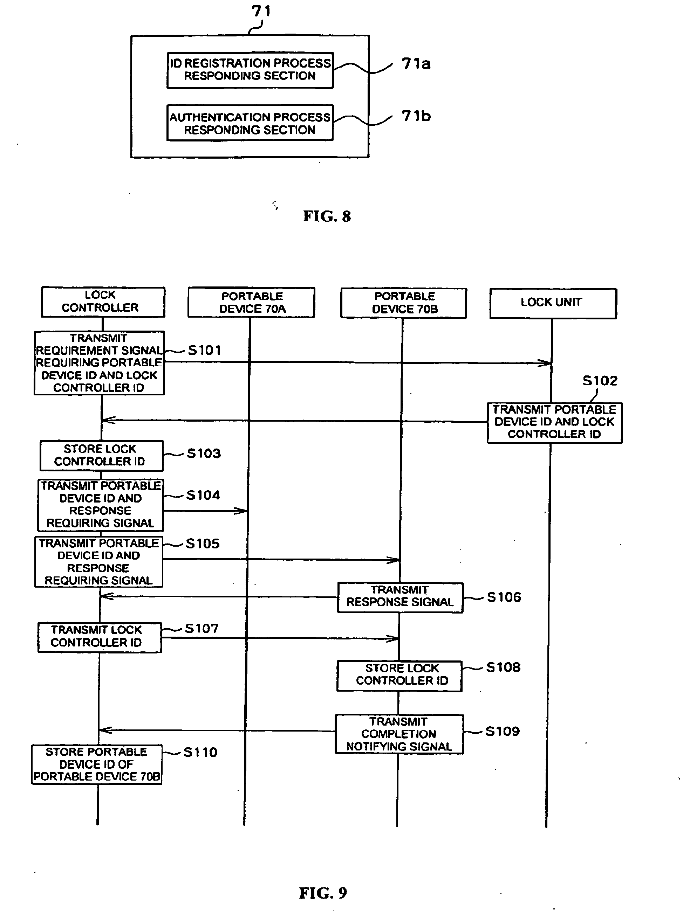

The process performed by the control section 71 of the portable devices 70A and 70B is now explained. Fig. 8 is a function block diagram of the control section 71. As illustrated in this figure, the control section 71 includes an ID registration process responding section 71a, and an authentication process responding section 71b as functional divisions.

The ID registration process responding section 71a responds to a signal received from the lock controller 10 in the portable device ID re-storing process performed by the lock controller 10. More specifically, when receiving a response requiring signal from the lock controller 10, the ID registration process responding section 71a transmits a response signal to the lock controller 10 in response to the response requiring signal. In this case, the ID registration process responding section 71a may transmit the response signal when receiving the response requiring signal, or may transmit the response signal when a predetermined signal is inputted through the operation sections 75 and 76 after receipt of the response requiring signal and execution of predetermined switch operation by the operator.

The authentication process responding section 71b responds to a signal received from the lock controller 10 in the authentication process performed by the lock controller 10. For example, when the authentication process method is the challenge and response method mentioned above, the authentication process responding section 71b creates response data from the challenge data received from the lock controller 10 and the portable device ID stored in the memory section 72 and transmits the response data to the lock controller 10.

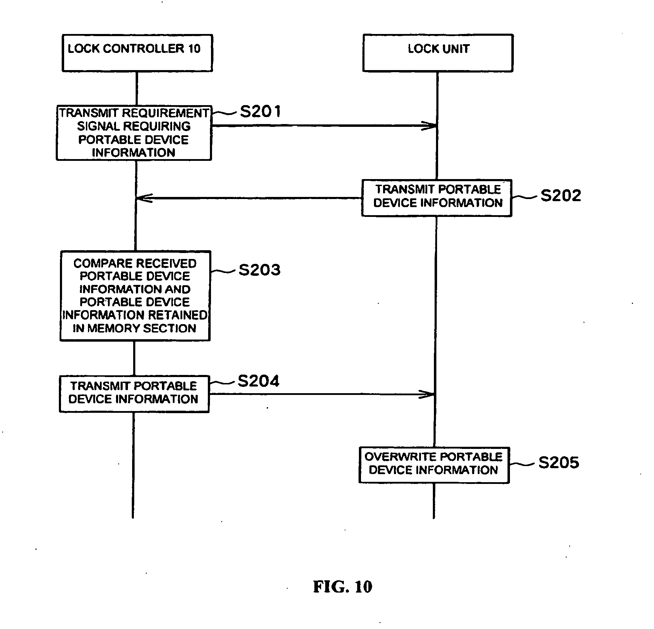

The processes performed by the robbery prevention system 1 are now discussed with reference to sequence figures of Figs. 9 and 10. Fig. 9 shows an example of the portable device ID re-storing process. Fig. 10 shows an example of the backup data renewal process. Initially, the re-storing process is explained. It is assumed that only the portable device 70B is present within the detection range of the lock controller 10, and that the portable device 70A is absent in the detection range.

When the replacement detecting section 11a judges that the new lock controller 10 has been attached to the vehicle body, the ID acquisition processing section 11c transmits a requirement signal requiring the portable device IDs and the lock controller ID to the lock unit 30 (S101). The ID registration process responding section 31a of the lock unit 30 having received the requirement signal reads the portable device IDs of the portable devices 70A and 70B and the lock controller ID stored in the memory section 32 as backup data, and transmits these IDs to the lock controller 10 (S102).

The lock controller ID storing section 11e of the lock controller 10 stores the lock controller ID acquired from the lock unit 30 in the storage section 12 (S103). The portable device searching and storing section 11d selects one of the plural portable device IDs received from the lock unit 30 (portable device 70A in this case), and transmits the selected portable device ID and a response requiring signal (S104). Since the portable device 70A which is not present within the detection range as described above does not receive the response requiring signal, the lock controller 10 does not receive a response signal from the portable device 70A.

Then, the portable device searching and storing section 11d selects among the plural portable device IDs received from the lock unit 30 a portable device ID (portable device ID of portable device 70B in this case) different from the portable device ID previously selected (portable device ID of portable device 70A in this case), and transmits the selected portable device ID and a response requiring signal (S105). In this example, since the portable device 70B is present within the detection range, the portable device 70B receives the portable device ID and the response requiring signal. The registration process responding section 71a of the portable device 70B compares the received portable device ID and the portable device ID of the portable device 70B stored in the memory section 72, and transmits a response signal to the lock controller 10 after confirming that the response requiring signal has been addressed to the portable device 70B (S106).

The portable device searching and storing section 11d of the lock controller 10 having received the response signal reads the lock controller ID from the memory section 12, and transmits the lock controller ID to the portable device 70B (S107). In this step, the portable device searching and storing section 11a may transmit the portable device ID of the portable device 70B as well as the lock controller ID. Then, the ID registration process responding section 71a of the portable device 70B may judge that the lock controller ID has been transmitted to the portable device 70B based on the portable device ID transmitted from the portable device searching and storing section 11a.

The ID registration process responding section 71a of the portable device 70B stores the received lock controller ID in the memory section 72 (S108), and transmits a completion notifying signal indicating this fact to the lock controller 10 (S109). When receiving the completion notifying signal, the portable device searching and storing section 11d stores the portable device ID of the portable device 70B in the memory section 12 (S110). In this step, the portable device searching and storing section 11d may store the registration number information indicating the number of the stored portable device IDs ("1" in this example) in the memory section 12.

Before execution of the process in S101, the lock unit 30 may authenticate the lock controller 10 based on manufacturer information having been stored in the memory section 12 during manufacture of the lock controller 10 to indicate that the lock controller 10 is a proper device. When the lock controller 10 is authenticated as a proper device, the lock unit 30 may transmit a signal indicating this fact to the lock controller 10 and then the lock controller 10 may transmit the requirement signal in S101.

Next, the renewal process of the backup data is discussed with reference to Fig. 10. It is assumed herein that the portable device ID stored in the memory section 12 has been changed by the process performed by the renewal processing section 11f of the lock controller 10 prior to the start of the renewal process.

The backup renewal processing section 11g of the lock controller 10 transmits a requirement signal requiring transmission of the portable device information stored as backup data to the lock unit 30 when the start switch 50a is turned on by the rider, for example (S201). When receiving the requirement signal, the backup renewal process responding section 31b of the lock unit 30 transmits the portable device information stored in the memory section 32 as backup data to the lock controller 10 (S202). The backup renewal processing section 11g compares the received portable device information and the portable device information stored in the memory section 12 (S203). In this example, since the portable device ID in the memory section 12 has been changed before the renewal process, the portable device ID does not coincide with the other portable device ID. Thus, the backup renewal processing section 11g transmits the portable device information in the memory section 12 to the lock unit 30 (S204). When receiving the portable device information from the lock controller 10, the backup renewal process responding section 31b overwrites the newly received portable device information on the portable device information stored in the memory section 32 to obtain new backup data (S205). In this step, the backup renewal process responding section 31b may transmit a signal indicating completion of the renewal process of the backup data to the lock controller 10.

Comparison between the backup data prior to renewal retained by the memory section 32 and the portable device information retained by the lock controller 10 may be performed by the lock unit 30. In this case, the backup renewal processing section 11g transmits the portable device information stored in the memory section 12 to the lock unit 30 according to predetermined timing. The backup renewal process responding section 31b compares the portable device information received from the lock controller 10 and the portable device information stored in the memory section 32 as backup data. When the portable device information does not coincide with the other portable device information, the newly received portable device information is overwritten on the stored portable device information.

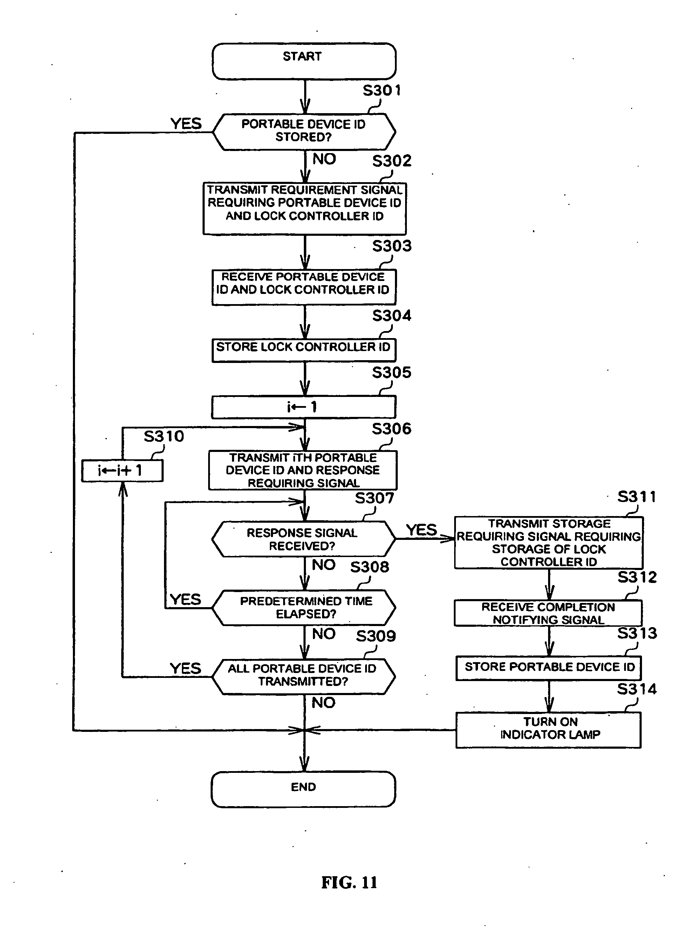

The re-storing process performed by the replacement detecting section 11a and the ID registration processing section 11b is now explained in more detail. Fig. 11 is a flowchart showing the flow of the processes executed by the replacement detecting section 11a and the ID registration processing section 11b. In this example, it is assumed that only one portable device ID is stored in the memory section 12 at the time of the re-storing of the portable device ID. It is also assumed that the memory section 32 of the lock unit 30 retains an ID table sequentially storing a plurality of portable device IDs.

Initially, the replacement detecting section 11a searches the memory area of the memory section 12 to judge whether the portable device ID has been stored (S301). When it is determined that the portable device ID has been already stored, the process ends.

When it is judged that the portable device ID has not been stored, the ID acquisition processing section 11c transmits a requirement signal requiring transmission of the portable device IDs and the lock controller ID to the lock unit 30 (S302), and acquires a plurality of the portable device IDs and the lock controller ID returned from the lock unit 30 (S303). In this step, the portable device IDs are stored in the ID table discussed above and transmitted in the form of the table.

Then, the lock controller ID storing section 11e stores the lock controller ID in the memory section 12 (5304) . The portable device searching and storing section 11d establishes parameter i as initial value 1 (S305), and transmits the portable device ID stored ith in the ID table and a response requiring signal (S306). Subsequently, the portable device searching and storing section 11d judges whether a response signal has been received from the portable device retaining the portable device ID transmitted in S306 (S307). When it is determined that the response signal has not been received yet, the portable device searching and storing section 11d judges whether predetermined time has elapsed from the time of transmission of the response requiring signal (S308). When it is determined that the predetermined time has not elapsed yet, the process returns to S107 and the portable device searching and storing section 11d again judges whether the response signal has been received.

When it is determined that the predetermined time has elapsed in S308, the portable device searching and storing section 11d judges whether the response requiring signal has been transmitted to all the portable devices retaining the portable device IDs stored in the ID table (portable devices 70A and 70B in this example) (S309). When it is determined that the response requiring signal has been already transmitted to all the portable devices, it is judged that the portable devices 70A and 70B are not present within the detection range and the re-storing process of the portable device ID ends. In this process, the portable device searching and storing section 11d may turn on the indicator lamp 90 to notify the operator that the re-storing of the portable device ID has not been completed, for example.

When it is determined that the response requirement signal has not been transmitted to all of the portable device IDs yet in S309, the portable device searching and storing section 11d increments the parameter i by one (S310) and the process returns to S306. Then, the portable device searching and storing section 11d again transmits the portable device ID stored ith in the ID table and the response requiring signal.

When it is determined that the response signal has been received from the portable device 70A or 70B in S307, the portable device searching and storing section 11d transmits the portable device ID of the portable device 70A or 70B having transmitted this response signal and a storage requiring signal requiring storage of the lock controller ID in the memory section 72 (S311). Then, the portable device searching and storing section 11d receives a completion notifying signal indicating that the lock controller ID has been stored in the memory section 72 in response to the storage requiring signal from the portable device 70A or 70B (S312) . Also, the portable device searching and storing section 11d stores the portable device ID of the portable device 70A or 70B having transmitted the response signal in the memory section 12 (S313). Then, the portable device searching and storing section 11d turns on the indicator lamp 90 in a predetermined manner to notify this fact to the operator (S314).

According to the robbery prevention system described above, the replacement detecting section 11a of the control section 11 detects replacement of the lock controller 10 with new one. In this process, the ID registration processing section 11b searches the portable device present within the predetermined detection range, and stores the portable device ID of this portable device in the memory section 12. Thus, the re-registration of the portable device ID needed when the lock controller is replaced can be facilitated.

### Description of Reference Numerals and Signs

- 1: robbery prevention system
- 2: engine (operation device)
- 3: steering shaft (operation device)
- 3a: lock mechanism (control target device)
- 5: handlebar
- 6: driving force transmission mechanism
- 7a: front wheel
- 7b: rear wheel
- 8: seat (operation device)
- 8a: lock mechanism (control target device)
- 10: lock controller
- 11: control section
- 11a: replacement detecting section (detecting means)
- 11b: ID registration processing section
- 11c: ID acquisition processing section (receiving means)
- 11d: portable device searching and storing section (searching and storing means)
- 11e: lock controller ID storing section
- 11f: ID renewal processing section
- 11g: backup renewal processing section (backup renewing means)
- 11h: authentication processing section
- 11i: authentication process responding section

- 12: memory section
- 13: communication section
- 14: actuator driving circuit
- 15: input circuit
- 16: display circuit
- 17: power source supply circuit
- 18, 19: interface section
- 20: relay driving circuit
- 21: power source circuit
- 30: lock unit (auxiliary controller)
- 31: control section
- 31a: ID registration process responding section
- 31b: backup renewal process responding section
- 31c: authentication processing section
- 32: memory section
- 33: lock mechanism driving circuit
- 34: power source circuit
- 35: interface section
- 40: engine control unit (ECU, control target device)
- 50: switch group
- 60: actuator
- 70A, 70B: portable device
- 71: control section
- 71a: ID registration process responding section
- 71b: authentication process responding section
- 72: memory section
- 73: communication section
- 74: display section
- 75, 76: control section
- 90: indicator lamp
- 91: battery
- 92: relay circuit
- 100: motorcycle

## Claims

1. A robbery prevention system (1), comprising:
a portable device (70A, 70B) comprising unique ID information;
a lock controller (10) comprising memory means (12) adapted to store the ID information, authenticate the portable device (70A, 70B) based on the ID information stored in the memory means (12) and the ID information received from the portable device (70A, 70B), and lock or unlock a control target device (3a, 8a, 40) according to an authentication result; and
an auxiliary controller (30) comprising memory means (72) and adapted to transmit and receive data to and from the lock controller (10) and store the ID information of the portable device (70A, 70B) as backup data within the memory means (72),
wherein the lock controller (10) includes:
receiving means (11c) adapted to receive the ID information from the auxiliary controller (30); and
is **characterised by** searching and storing means (11d) adapted to transmit a response requiring signal for searching for the portable device (70A, 70B) which has the ID information received by the receiving means (11c) from the auxiliary controller (30) and is present within a predetermined detection range, and store the ID information of the portable device (70A, 70B) which has transmitted a response signal to the response requiring signal in the memory means (12).

2. The robbery prevention system (1) according to claim 1, wherein the unique ID information is allocated to the corresponding portable device (70A, 70B) in advance.

3. The robbery prevention system (1) according to claim 1 or 2, further comprising an operation device (2, 3, 8), wherein the control target device (3a, 8a, 40) controlled by the lock controller (10) restricts operation of the operation device (2, 3, 8) and wherein the operation of the operation device (2, 3, 8) is restricted when the control target device (3a, 8a, 40) controlled by the lock controller (10) is locked, and the operation of the operation device (2, 3, 8) is allowed when the control target device (3a, 8a, 40) controlled by the lock controller (10) is unlocked.

4. The robbery prevention system (1) according to any preceding claim, wherein the lock controller (10) further includes detecting means (11a) adapted to detect replacement of the lock controller (10) and the searching and storing means (11d) is adapted to store the ID information of the portable device (70A, 70B) having transmitted the response signal to the response requiring signal at the time of replacement of the lock controller (10).

5. The robbery prevention system (1) according to claim 4, wherein the detecting means (11a) is adapted to judge that the lock controller (10) has been replaced when the memory means (12) of the lock controller (10) does not have ID information.

6. The robbery prevention system (1) according to any preceding claim, wherein the searching and storing means (11d) of the lock controller (10) is adapted to store a predetermined number of the ID information in the memory means (12).

7. The robbery prevention system (1) according to any preceding claim, wherein the auxiliary controller 30 further includes backup renewing means (11g) adapted to renew the ID information stored in the memory means (72) of the auxiliary controller (30) as backup data according to predetermined timing.

8. A vehicle (100) having the robbery prevention system (1) according to any preceding claim.

## Patentansprüche

1. Diebstahlsicherungssystem (1), umfassend:
ein tragbares Gerät (70A, 70B), umfassend eindeutige Identitätsinformationen;
eine Verriegelungssteuervorrichtung (10), umfassend ein Speichermittel (12), das angepasst ist, um die Identitätsinformationen zu speichern, das tragbare Gerät (70A, 70B) auf Basis der im Speichermittel (12) gespeicherten Identitätsinformationen, und die vom tragbaren Gerät (70A, 70B) erhaltenen Identitätsinformationen zu authentifizieren, und ein Steuerungszielgerät (3a, 8a, 40) gemäss einem Authentifizierungsresultat zu sperren oder zu entsperren; und
eine Hilfssteuervorrichtung (30), umfassend ein Speichermittel (72) und angepasst, um Daten zur Verriegelungssteuervorrichtung (10) zu senden und von dieser zu empfangen, und die Identitätsinformationen des tragbaren Geräts (70A, 70B) als Backup-Daten im Speichermittel (72) zu speichern,
wobei die Verriegelungssteuervorrichtung (10) Folgendes einschließt:
ein Empfangsmittel (11c), das angepasst ist, um die Identitätsinformationen von der Hilfssteuervorrichtung (30) zu empfangen; und **gekennzeichnet ist durch** ein Such- und Speichermittel (11d), das angepasst ist, um ein Antwort-erforderndes Signal zu senden, um das tragbare Gerät (70A, 70B), das die **durch** das Empfangsmittel (11c) von der Hilfsteuervorrichtung (30) empfangenen Identitätsinformationen hat, zu suchen, und in einem vorbestimmten Detektionsbereich vorhanden ist, und die Identitätsinformationen des tragbaren Geräts (70A, 70B), das ein Antwortsignal an das Antwort-erfordernde Signal im Speichermittel (12) gesendet hat, zu speichern.

2. Diebstahlsicherungssystem (1) nach Anspruch 1, wobei die einmaligen Identitätsinformationen im Voraus dem entsprechenden tragbaren Gerät (70A, 70B) zugeteilt werden.

3. Diebstahlsicherungssystem (1) nach Anspruch 1 oder 2, ferner umfassend eine Betätigungsvorrichtung (2, 3, 8), wobei das von der Verriegelungssteuervorrichtung (10) gesteuerte Steuerungszielgerät (3a, 8a, 40) die Betätigung der Betätigungsvorrichtung (2, 3, 8) einschränkt, und wobei die Betätigung der Betätigungsvorrichtung (2, 3, 8) eingeschränkt ist, wenn das von der Verriegelungssteuervorrichtung (10) gesteuerte Steuerungszielgerät (3a, 8a, 40) gesperrt ist, und die Betätigung der Betätigungsvorrichtung (2, 3, 8) ermöglicht wird, wenn das von der Verriegelungssteuervorrichtung (10) gesteuerte Steuerungszielgerät (3a, 8a, 40) entsperrt ist.

4. Diebstahlsicherungssystem (1) nach irgendeinem der vorhergehenden Ansprüche, wobei die Verriegelungssteuervorrichtung (10) ferner eine Erfassungseinrichtung (11a) einschließt, die angepasst ist, um ein Auswechseln der Verriegelungssteuervorrichtung (10) zu erfassen und das Such- und Speichermittel (11d) angepasst ist, um die Identitätsinformationen des tragbaren Geräts (70A, 70B), das das Antwortsignal an das Antwort-erfordernde Signal während dem Auswechseln der Verriegelungssteuervorrichtung (10) gesendet hat, zu speichern.

5. Diebstahlsicherungssystem (1) nach Anspruch 4, wobei die Erfassungseinrichtung (11a) angepasst ist, um zu beurteilen, dass die Verriegelungssteuervorrichtung (10) ausgewechselt wurde, wenn das Speichermittel (12) der Verriegelungssteuervorrichtung (10) keine Identitätsinformationen hat.

6. Diebstahlsicherungssystem (1) nach irgendeinem der vorhergehenden Ansprüche, wobei das Such- und Speichermittel (11d) der Verriegelungssteuervorrichtung (10) angepasst ist, um eine vorbestimmte Anzahl von Identitätsinformationen in das Speichermittel (12) zu speichern.

7. Diebstahlsicherungssystem (1) nach irgendeinem der vorhergehenden Ansprüche, wobei die Hilfssteuervorrichtung (30) ferner ein Backup-Erneuerungsmittel (11g) einschließt, das angepasst ist, um die im Speichermittel (72) der Hilfssteuervorrichtung (30) gespeicherten Identitätsinformationen als Backup-Daten gemäss einer vorbestimmten Zeitvorgabe zu erneuern.

8. Fahrzeug (100) mit einem Diebstahlsicherungssystem (1) nach irgendeinem der vorhergehenden Ansprüche.

## Revendications

1. Système de prévention contre le vol (1), comprenant:
un dispositif portable (70A, 70B), comprenant l'information d'identité unique;
une commande de verrouillage (10), comprenant un moyen de mémoire (12), adapté pour enregistrer l'information d'identité, authentifier le dispositif portable (70A, 70B) sur la base de l'information d'identité enregistrée dans le moyen de mémoire (12) et l'information d'identité reçue du dispositif portable (70A, 70B), et verrouiller ou déverrouiller un dispositif de commande cible (3a, 8a, 40) selon un résultat d'authentification, et
une commande auxiliaire (30) comprenant un moyen de mémoire (72) et adapté pour transmettre et recevoir des données à et à partir de la commande de verrouillage (10) et stocker l'information d'identité du dispositif portable (70A, 70B) en tant que données de backup dans le moyen de mémoire (72),
dans lequel la commande de verrouillage (10) inclut:
un moyen de réception (11c) adapté pour recevoir l'information d'identité à partir de la commande auxiliaire (30); et **caractérisé par** un moyen de recherche et de stockage (11d) adapté pour transmettre un signal demandeur de réponse, pour rechercher le dispositif portable (70A, 70B) qui a l'information d'identité reçue par le moyen de réception (11c) à partir de la commande auxiliaire (30) et est présent dans une plage de détection prédéterminée, et stocker l'information d'identité du dispositif portable (70A, 70B) qui a transmis un signal de réponse au signal demandant une réponse dans le moyen de mémoire (12).

2. Système de prévention contre le vol (1) selon la revendication 1, dans lequel l'information d'identité unique est allouée au dispositif portable correspondant (70A, 70B) à l'avance.

3. Système de prévention contre le vol (1) selon la revendication 1 ou 2, comprenant en outre un dispositif d'opération (2, 3, 8), dans lequel le dispositif de commande cible (3a, 8a, 40), commandé par la commande de verrouillage (10) restreint l'opération du dispositif d'opération (2, 3, 8) et dans lequel l'opération du dispositif d'opération (2, 3, 8) est restreinte lorsque le dispositif de commande cible (3a, 8a, 40) commandé par la commande de verrouillage est verrouillé, et l'opération du dispositif de commande (2, 3, 8) est autorisée lorsque le dispositif de commande cible (3a, 8a, 40) commandé par la commande de verrouillage (10) est déverrouillé.

4. Système de prévention contre le vol (1) selon l'une quelconque des revendications précédentes, dans lequel la commande de verrouillage (10) inclut en outre un moyen de détection (11a) adapté pour détecter le remplacement de la commande de verrouillage (10) et le moyen de recherche et de stockage (11d) est adapté pour stocker l'information d'identité du dispositif portable (70A, 70B) ayant transmis le signal de réponse au signal demandeur de réponse au moment du remplacement de la commande de verrouillage (10).

5. Système de prévention contre le vol (1) selon la revendication 4, dans lequel le moyen de détection (11a) est adapté pour déterminer que la commande de verrouillage (10) a été remplacée lorsque le moyen de mémoire (12) de la commande de verrouillage (10) n'a pas d'information d'identité.

6. Système de prévention contre le vol (1) selon l'une quelconque des revendications précédentes dans lequel le moyen de recherche et de stockage (11d) de la commande de verrouillage (10) est adapté pour stocker un nombre prédéterminé de l'information d'identité dans le moyen de mémoire (12).

7. Système de prévention contre le vol (1) selon l'une quelconque des revendications précédentes, dans lequel la commande auxiliaire (30) inclut en outre un moyen de renouvellement de backup (11g) adapté pour renouveler l'information d'identité stockée dans le moyen de mémoire (72) de la commande auxiliaire (30) en tant que données de backup selon une synchronisation prédéterminée

8. Véhicule (100) comportant un système de prévention contre le vol (1) selon l'une quelconque des revendications précédentes.
